# EUROPEAN PATENT SPECIFICATION

(11) **EP 0 680 814 B1**
(45) Date of publication and mention of the grant of the patent: **28.07.1999**
(21) Application number: 94931193.0
(22) Date of filing: 31.10.1994
(51) Int. Cl.: B29C 47/02, B29C 47/12, B60J 1/00

(54) **EXTRUDATE AND EXTRUSION PROCESS**
EXTRUDAT UND EXTRUSIONSVERFAHREN
PRODUIT ET PROCEDE D'EXTRUSION

(30) Priority: 11.11.1993 JP 28267593
(43) Date of publication of application: 08.11.1995
(73) Proprietor: TOKAI KOGYO KABUSHIKI KAISHA, Obu-shi, Aichi 474 (JP)
(72) Inventor: ITO, Toshikazu, Obu-shi Aichi 474 (JP)
(74) Representative: Woods, Geoffrey Corlett
(86) International application number: JP9401836
(87) International publication number: WO9513180

(56) References cited:
- FR-A- 2 168 548
- JP-A- 4 218 427
- JP-A- 4 261 823
- JP-A- 5 001 193
- JP-A- 5 008 280
- JP-A- 5 059 242
- JP-B- 4 012 741
- US-A- 4 256 685
- DATABASE WPI Section Ch, Week 9105 Derwent Publications Ltd., London, GB; Class A14, AN 91-032042 & JP-A-02 300 252 ( KUBOTA CORP) , 12 December 1990
- Kinki Chemistry Association, Vinyl Dep., "Polyvinyl Chloride - its Basic and Application", October 25, 1988 (25.10.88), Nikkan Kogyo Shimbun Co., Ltd., p. 530-534.

## Description

### TECHNICAL FIELD

The present invention relates to an extrusion molded product and an extrusion molding method.

### BACKGROUND ART

In recent extrusion molding processes, a main die having a die opening and a supplemental die movable along the die opening are used to change the configuration of an extrusion opening (see Japanese Laid-Open Patent Publications Nos. 59-114040 and 4-159154).

Conventionally, in such extrusion molding processes in which the configuration of the extrusion opening is changed, rubber has been typically used as a material (molding material). However, a thermoplastic resinous materials, especially, a vinyl chloride based resinous material has recently been examined as the molding material.

In general, when plasticizer is added to the vinyl chloride based resinous material to increase plasticity thereof, the latter resinous material has a better formability than the rubber. Such a plasticizer-containing vinyl chloride based resinous material may form a molded product having a good appearance and a high weather resistivity. Therefore, the plasticizer-containing vinyl chloride based resinous material has been used as the molding material to manufacture parts for vehicles.

As with the extrusion molding of the rubber (non-vulcanized rubber), in the extrusion molding of the vinyl chloride based resinous material, such a resinous material is required to fully conform to change of the extrusion opening when it is extruded.

However, unlike the rubber (non-vulcanized rubber), the vinyl chloride based resinous material containing the plasticizer can not have sufficient self-sustainability during an extruding process since such a material is excessively softened in its molten state. Therefore, it is difficult to perform the extrusion molding operation while keeping the configuration of the extrusion molded product shaped in accordance with the position of the supplemental die. Moreover, the molded product may suffer some damage to its portion at which the configuration thereof is changed, due to travel of the supplemental die.

In order to prevent the defects, it is necessary to diminish the amount of change of the configuration of the molded product, or to reduce the extruding speed of the molding material so as to reduce the moving speed of the supplemental die. This may restrict design changes of the parts and may lower productivity of the parts.

### DISCLOSURE OF THE INVENTION

An object of the present invention is to provide an extrusion molded product made of a vinyl chloride based resinous material which may be formed while accurately conforming to change of an extrusion opening so that the cross-sectional configuration thereof is changed in a longitudinal direction, and which may be manufactured at a high level of productivity.

Further, another object of the present invention is to provide an extrusion molding method which is performed by changing the extrusion opening, and which may effectively form a molded product of which the cross-sectional configuration is changed in a longitudinal direction.

In order to solve the above-noted problems, the inventor of the present invention has conducted considerable testing so as to evaluate the material properties of the vinyl chloride based resinous material. As a result, he has discovered that the vinyl chloride based resinous material is suitable for performing an extrusion molding, and that the vinyl chloride based resinous material can be extruded while maintaining the cross-sectional configuration of the molded product as shaped, by improving "elongation" in a molten state thereof, which is one of material properties developed immediately after being extruded from the extrusion opening. Thus, the following inventions have been accomplished.
(1) A first invention provides an extrusion molded product made of a vinyl chloride based resinous material of which the cross-sectional configuration is changed in a longitudinal direction, the vinyl chloride based resinous material comprising a copolymer of vinyl chloride with alkyl ester or α-olefin.
(2) A second invention provides an extrusion molded product made of a vinyl chloride based resinous material of which the cross-sectional configuration is changed in a longitudinal direction, the vinyl chloride based resinous material comprising a polymer blend containing at least two compounds selected from the group consisting of a polymer of vinyl chloride (hereinafter simply referred to as PVC), a polymer of alkyl ester, and a copolymer of vinyl chloride with alkyl ester.
(3) A third invention provides an extrusion molded product, wherein the vinyl chloride based resinous material of the second invention comprises a polymer blend containing PVC and a copolymer of PVC with methyl methacrylate (hereinafter referred to as MMA) having a MMA copolymerization ratio of 2% by weight (hereinafter simply referred to as %), and wherein the polymer blend contains the copolymer of not less than 50%.
(4) A forth invention provides an extrusion molded product, wherein the vinyl chloride based resinous material of the second invention comprises a polymer blend containing PVC and a copolymer of vinyl chloride with MMA having a MMA copolymerization ratio of 8%, and wherein the polymer blend contains the copolymer of not less than 10%.
(5) A fifth invention provides an extrusion molded product, wherein the vinyl chloride based resinous material of the first invention comprises a copolymer of vinyl chloride with ethylene having an ethylene copolymerization ratio of not less than 2% and not more than 8%.
(6) A sixth invention provides a method of manufacturing an extrusion molded product by extruding a vinyl chloride based molding material through a first extrusion opening of an extrusion molding die, the extrusion molding die having a main die and a supplemental die to form the first extrusion opening therebetween, comprising:
   a first step for providing a vinyl chloride based resinous material as defined in the first invention or the second invent ion as the vinyl chloride based molding material, and for extruding the vinyl chloride based resinous material through the first extrusion opening; and
   a second step for moving a supplemental extrusion opening formed by means of the supplemental die by shifting the supplemental die while extruding the vinyl chloride based resinous material so as to form a second extrusion opening, and for extruding the vinyl chloride based resinous material through the second extrusion opening;
   the first and the second steps being carried out at a constant extruding speed.

The present invention will be described in greater detail hereinafter.

A vinyl chloride based resinous composition used in the present invention (hereinafter simply referred to as a composition) is equivalent to a usual composition which contains polyvinyl chloride having a polymerization degree of 900 to 2000 and which is used for general extrusion molding purposes. To increase the elongation in the molten state of the composition, the present invention utilizes a modification effect induced by copolymerizing vinyl chloride with the other monomer, or by blending PVC, a polymer of alkyl ester, and a copolymer of vinyl chloride with the alkyl ester for forming a polymer blend.

In other words, in the composition of the present invention, a modification is attributed to an internal plsticization effect in a vinyl chloride based copolymer or a blending effect of desired polymers so that the composition is increased in elongation in the molten state. The composition thus modified is improved in self-sustainability and conformability to travel of a supplemental die. Thus, such a composition may be extruded at an increased extruding speed, and may produce a molded product having a good configuration and property.

Further, it has been conventionally known to modify a vinyl chloride based resinous material by utilizing effects introduced via a copolymerization reaction. However, this is intended to enhance fluidability of the material for improving of processability rather than to enhance the property of the molded product.

For preparing the composition constituted of the copolymer, the alkyl ester may include compounds represented by acrylic ester or methacrylic ester.

Additionally, the alkyl ester may be a sole compound or a combination of a plurality of compounds.

Moreover, in the case that the composition is constituted of the copolymer of vinyl chloride with α-olefin, the α-olefin may include compounds such as ethylene and propylene. The proportion of the α-olefin to vinyl chloride needs to be not less than 1% and not more than 8%, preferably, not less than 2% and not more than 8%.

Although the α-olefin may be a combination of a plurality of compounds, if the proportion of the α-olefin to vinyl chloride is less than 1%, the composition is not effectively modified. If the proportion is not less than 2%, the composition is apparently modified. Further, if the proportion is greater than 8%, the composition has a reduced heat-resistance and exhibits an increased change in elongation in the molten state relative to variations of temperature (proportional to the proportion of the α-olefin). This will not be desirable since it is difficult to control temperature of the composition during the extrusion molding.

Further, in the case that the proportion of the α-olefin is in the allowable range of 1 to 8%, the composition is improved in processability with increase of the proportion of the α-olefin since the heat-resistance thereof is decreased with increase of the proportion.

Also, vinyl chloride may be copolymerized with a vinyl ester such as vinyl acetate to improve the elongation in the molten state of the composition. In addition, alkyl vinyl ether, acrylonitrile and the like may be used to improve the elongation in the molten state of the composition.

The copolymerization of vinyl chloride with the alkyl ester may be conducted through a conventional reaction, such as a mechanochemical reaction, a combination of a polycondensation and a radical polymerization, a reaction mediated by an ozonide, and a polyaddition.

PVC (polymer of vinyl chloride) as mentioned above means a homopolymer of vinyl chloride.

The polymer blend means a blend of a plurality of polymers which are physically mixed by a compatibility of each of the copolymers and the polymers.

The polymer blend is obtained only by physically mixing the several polymers without a copolymerization reaction. This may reduce cost and time required for manufacture as compared to the case where the copolymer is used.

Furthermore, with respect to the copolymer of vinyl chloride with the alkyl ester and the polymer of the alkyl ester which are employed for preparing the polymer blend, MMA is preferable for the alkyl ester.

This is because a polymer of MMA (hereinafter referred to as PMMA) has a superior compatibility to PVC and a higher viscosity, and MMA exhibits the internal plasticization effect when it is copolymerized.

In addition, with respect to the copolymer of vinyl chloride with MMA which is used for preparing the polymer blend, the MMA copolimerization ratio to vinyl chloride is preferable to be not less than 2% and not more than 8%. The reason is that if the ratio is less than 2%, the composition is not sufficiently modified, and that if the ratio is greater than 8%, the composition is excessively increased in quality.

Further, with respect to the copolymer of vinyl chloride with the alkyl ester and the polymer of the alkyl ester, a compound selected as the alkyl ester for the copolymer has not necessarily be identical with a compound selected as the alkyl ester for the polymer. However, from a viewpoint in terms of the compatibility of the copolymer and the polymer as produced, it will be preferable that these compounds are identical with each other.

In general, a plasticizer (such as DOP and DINP) is used to obtain a plasticization effect in the composition. However, such a plasticizer not only can not remarkably enhance the elongation in the molten state of the composition, but significantly deteriorates the property of the composition, even if the amount thereof is increased.

On the contrary, each of the polymer blend and the copolymer of the present invention has a remarkably increased elongation in the molten state, and may also have an increased elongation in the molten state even when it is combined with some additives, such as a plasticizer, a stabilizing agent, an auxiliary stabilizing agent and a filler.

### BRIEF DESCRIPTION OF THE DRAWINGS

FIG. 1 is an elevational view of an extrusion molding die;
FIG. 2 is a view illustrating operation of the extrusion molding die;
FIG. 3 is a perspective view of a molding as formed;
FIG. 4 is an explanatory view of a melt strength measuring system to determine a threshold pulling speed;
FIG. 5 is a graph of a melt elongation versus temperature in Examples 1 and 2 and Control 1;
FIG. 6 is a graph of a melt elongation versus temperature in Examples 3 to 5;
FIG. 7 is a graph of a melt elongation versus temperature in Control 3;
FIG. 8 is an explanatory view of a piston extrusion-type melt strength measuring system to determine a threshold pulling speed;
FIG. 9 is a perspective view showing a weather strip in other embodiments of the present invention; and
FIG. 10 is a view illustrating operation of the extrusion molding die used for other embodiments of the present invention.

### BEST MODE FOR CARRYING OUT THE INVENTION

### [Examples 1 to 7 and Controls 1 to 3]

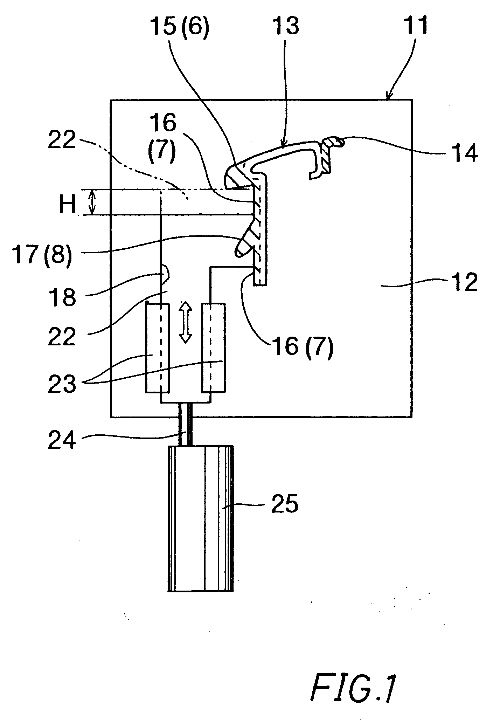

A preferred embodiment according to the present invention will be explained with reference to FIGS. 1 to 8.

It should be noted, however, that the present invention is not limited to the following examples.

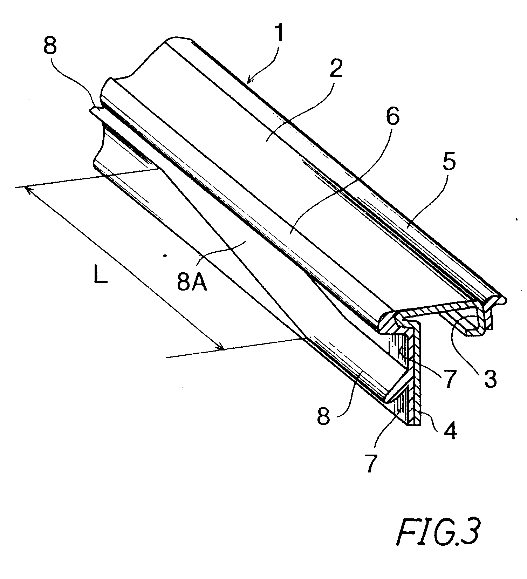

Each of these examples exemplifies a molding 1 for vehicle shown in FIG. 3 formed of a desired composition, and an extrusion molding method thereof carried out by utilizing a prescribed composition and an extrusion molding die 11 shown in FIG. 1. The molding 1 is formed as a molded product of which the cross-sectional configuration is changed in a longitudinal direction.

As shown in FIG. 3, the molding 1 includes a shaped core metal 2 having a narrower side surface 3, a wider side surface 4, and a lip 5 made of the prescribed composition and integrally extrusion molded on the side surface 3 so as to extend in a longitudinal direction. The molding 1 further includes a water guide strip 6, a covering layer 7 and a protector strip 8 which are bonded to the side surface 4 so as to extend in a longitudinal direction. In the molding 1, as shown in FIG. 3, the protector strip 8 has an inclined section 8A which diagonally extends upward on the side surface 4. The inclined section 8A is formed by shifting a supplemental die 22 of the extrusion molding die 11 during a molding process, and extends over a distance L.

The extrusion molding die 11 used in these examples is a die that pushes out the core metal 2 as previously shaped while extruding the molten composition along the core metal 2, thereby producing the molding 1 which is constituted of the core metal 2 and extrudates adhered to the core metal 2.

As shown in FIG. 1, the extrusion molding die 11 is constituted mainly of a main die 12, and the supplemental die 22 to form the protector strip 8. These dies have desired extrusion openings 13, 14, 15, 16 and 17. The main die 12 further has a recess 18 adjacent to and communicating with the extrusion opening 16. The supplemental die 22 is supported by guide members 23 and is slidably received in the recess 18 so as to vertically move over a desired distance H.

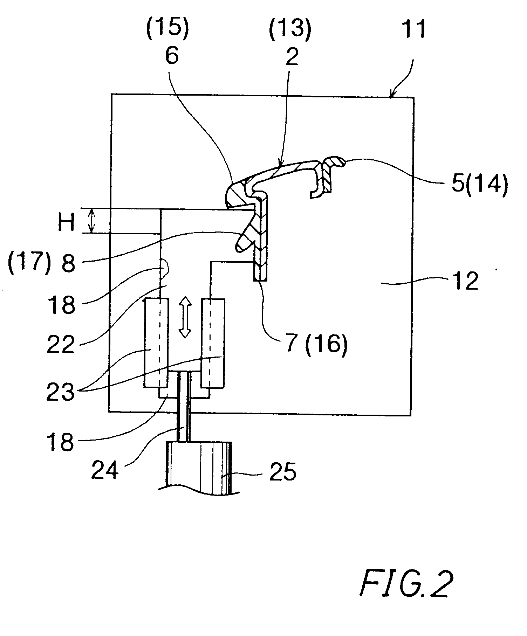

The supplemental die 22 has the extrusion opening 17 which is positioned adjacent to the extrusion opening 16 of the main die 12 so as to form the protector strip 8. In addition, the supplemental die 22 is coupled to a rod 24 which is connected to a drive unit 25 disposed under the extrusion molding die 11. Thus, the supplemental die 22 can be moved over the desired distance H between a position shown in FIG. 1 and a position shown in FIG. 2.

The extrusion openings 13, 14, 15 and 16 have a desired configuration to pass the core metal 2 therethrough, and to extrude the molten composition therethrough for forming the lip 5, the water guide strip 6 and the protector strip 8 on required portions of the core metal 2.

Now, the compositions used in each of the examples will be described.

The compositions in Examples 1 to 7 were formulated by mixing base resins A to G (principally, polymer blends) shown in TABLE 1 with other common constituents shown in TABLE 2, respectively. Blending ratios of the common constituents to each of the base resins A to G are shown in TABLE 2.

Further, the compositions in Controls 1 to 3 were formulated by mixing base resins H to J shown in TABLE 1 with other common constituents shown in TABLE 2, respectively. Blending ratios of the common constituents to each of the base resins H to J are shown in TABLE 2.

In TABLE 1, "2% polymer" corresponds to a copolymer of vinyl chloride with MMA having a MMA copolymerization ratio of 2%. On the other hand, "8% polymer" corresponds to a copolymer of vinyl chloride with MMA having a MMA copolymerization ratio of 8%.

**TABLE 1**

| Examples or Controls | Base Resins | Constituents of Polymer Blend (%) | | | |
|---|---|---|---|---|---|
| | | 2% Polymer | 8% Polymer | PVC | PMMA |
| Examples | | | | | |
| 1 | A | 100 | 0 | 0 | 0 |
| 2 | B | 50 | 0 | 50 | 0 |
| 3 | C | 0 | 50 | 50 | 0 |
| 4 | D | 0 | 20 | 80 | 0 |
| 5 | E | 0 | 10 | 90 | 0 |
| 6 | F | 0 | 0 | 85 | 15 |
| 7 | G | 0 | 0 | 92 | 8 |

| Controls | | | | | |
|---|---|---|---|---|---|
| 1 | H | 25 | 0 | 75 | 0 |
| 2 | I | 0 | 0 | 95 | 5 |
| 3 | J | 0 | 0 | 100 | 0 |

**TABLE 2**

| PREPARATION OF COMPOSITIONS | |
|---|---|
| Base Resin | 100 |
| DOP | 45 |
| Ba-Zn Based Stabilizing Agent | 4 |
| Epoxy Based Auxiliary Stabilizing Agent | 6 |
| Calcium Carbonate | 12 |
| (Parts by Weight) | |

With respect to each of the compositions in Examples 1 to 7 and Controls 1 to 3, a "melt elongation" was determined by utilizing a melt strength measuring system supplied under the trademark Laboplastomill (Model CRT-400G) by K. K. Toyo Seiki Seisakusho.

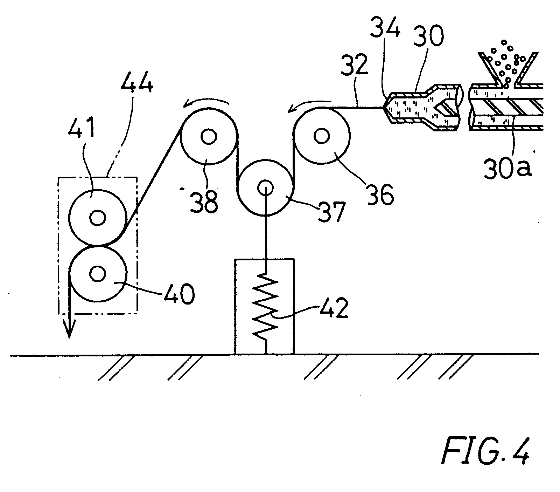

As shown in FIG. 4, the system uses a small extrusion molding machine 30. The composition in a molten state is extruded from a die 34 to form a string-like extrudate 32 at a required temperature. The string-like extrudate 32 passes around pulleys 36, 37 and 38 before entering between a pull roller 40 and a forcing roller 41. The pulley 37 is fixed via a tension spring 42.

The pull roller 40 is coupled to revolution control means 44 for successively increasing a rotation speed thereof so that the rotation speed just before the string-like extrudate 32 is broken is recorded as a threshold pulling speed.

In these examples, the "melt elongation" of each of the compositions is determined at each of temperatures of 150°C, 160°C and 170°C. Further, the "melt elongation" is determined as the threshold pulling speed of the string-like extrudate 32 extruded from the die 34 under a condition that a screw 30a of the extrusion molding machine 30 is rotated at a rotation speed of 5 rpm.

Further, it has been known that if the composition has the threshold pulling speed greater than 20 m/min, the supplemental die 22 of the extrusion molding die 11 shown in FIG. 1 can be shifted at an efficient speed of 5 to 10 mm/min during the extrusion molding.

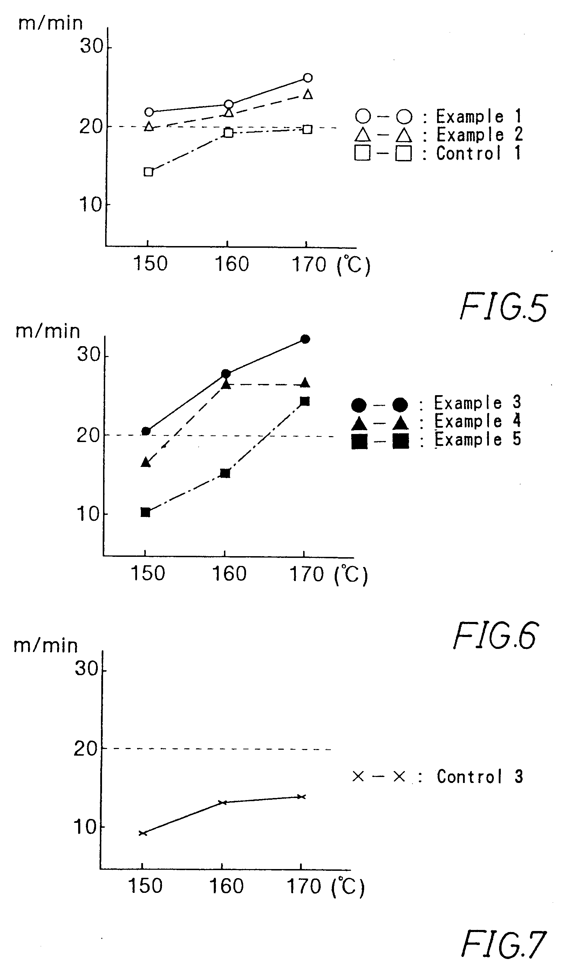

The date in Table 3 and FIGS. 5 to 7 represent results obtained with respect to the compositions of Examples 1 to 7 and Controls 1 to 3 at respective temperatures.

**TABLE 3**

| Compositions | Threshold Pulling Speed of String-Like Extrudate (m/min) | | |
|---|---|---|---|
| | 150°C | 160°C | 170°C |
| Examples | | | |
| 1 | 22.0 | 23.3 | 27.5 |
| 2 | 19.5 | 22.5 | 25.0 |
| 3 | 20.7 | 28.8 | 33.2 |
| 4 | 17.0 | 27.0 | 28.0 |
| 5 | 11.0 | 16.0 | 26.0 |
| 6 | --- | --- | 23.0 |
| 7 | --- | --- | 22.0 |

| Controls | | | |
|---|---|---|---|
| 1 | 14.0 | 19.5 | 20.5 |
| 2 | --- | --- | 13.0 |
| 3 | 9.5 | 13.0 | 14.0 |

| | | | |
|---|---|---|---|
| --- : Not determined | | | |

From the data shown in Table 3 and FIGS. 5 to 7, the followings will be apparent.

First, as observed from the data on Example 1, the composition containing only the 2% copolymer as the base resin has the threshold pulling speed greater than 20 m/min. Such a composition will be preferable for obtaining the intended molded product and for performing the extrusion molding method.

Further, as observed from the data on Example 2 and Controls 1 and 3, the composition containing the polymer blend of the 2% copolymer and PVC as the base resin will be preferable for obtaining the intended molded product and for performing the extrusion molding method provided that the base resin contains the 2% copolymer of not less than 50%.

As will be recognized, in the composition in Examples 1 and 2, the base resin contains MMA of 1% to 2%. On the other hand, in the composition in the Control 1, the base resin contains MMA of 0.5%.

As observed from the data on Examples 3 to 5, in each of the compositions containing the polymer blend of the 8% copolymer and PVC as the base resin, the melt elongation thereof increases as the content of the 8% copolymer in the base resin is raised in the range of 10% to 50%. Moreover, each of the compositions in Examples 3 to 5 has the melt elongation not less than 20 m/min. Therefore, these compositions will be preferable for obtaining the intended molded product and for performing the extrusion molding method.

In these compositions (Examples 3 to 5), the base resin contains MMA of 0.8% to 4%.

As observed from the data on Examples 6 and 7 and Controls 2 and 3, the composition containing the polymer blend of PVC and PMMA as the base resin will be preferable for obtaining the intended molded product and for performing the extrusion molding method if the base resin contains PMMA of not less than 8%.

Each of the compositions in Examples 1 to 7 was extruded from the extrusion molding machine 11 to form the molding 1. The extrusion molding operation was carried out by extruding each of the compositions (Examples 1 to 7) at a constant extruding speed (4 m/min for practical application) while optionally moving the supplemental die 22 for shaping the molded product to a desired configuration.

In the extrusion molding operation for each of the compositions (Examples 1 to 7), the supplemental die 22 could be shifted at the speed of 5 to 10 mm/sec. This means that the supplemental die 22 is shiftable at the efficient speed if the compositions in Examples 1 to 7 are used.

Consequently, the molded product made of each of the compositions can be formed while accurately conforming to the large amount of travel of the supplemental die 22, without lowering the extruding speed. The molded product can also be manufactured at good productivity without risk of structural damage and exhibits superior property.

Further, since such a molded product may accommodate enough to the change of the extruding speed, the mechanical strength thereof is not reduced on a portion at which the cross-sectional configuration thereof is drastically changed.

### [Examples 8 to 12 and Controls 4 and 5]

Now, resinous materials each of which is constituted of a copolymer of vinyl chloride with ethylene, one of the α-olefin, will be described.

The resinous materials correspond to the copolymers of vinyl chloride with ethylene having ethylene copolymerization ratios shown in Table 4.

**TABLE 4**

| Polymerization Degree/Copolymerization Ratio | |
|---|---|
| Examples | |
| 8 | 1.0% (Ratio to VC) |
| 9 | 2.0 |
| 10 | 4.0 |
| 11 | 6.0 |
| 12 | 8.0 |

| Controls | |
|---|---|
| 4 | 0.5 |
| 5 | PVC (Polymerization Degree: 1300) |

With respect to each of the resinous materials and PVC in Examples 8 to 12 and Controls 4 and 5, melt elongation thereof was determined by utilizing a melt strength measuring system supplied under the trademark Capirograph by K. K. Toyo Seiki Seisakusho.

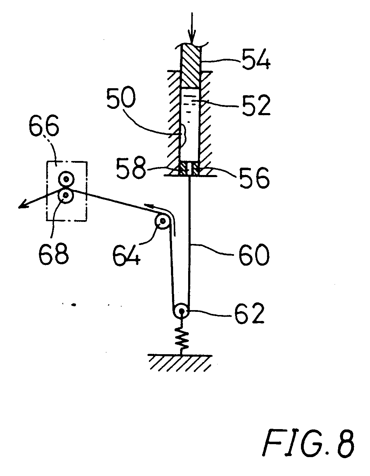

As shown in FIG. 8, the system uses a pressure piston 54 which pressurizes a molten resinous material 52 in a material supplier 50. The molten resinous material 52 is extruded from a small aperture 58 of a capillary 56 to form a string-like extrudate 60. The string-like extrudate 60 passes around pulleys 62 and 64 before entering pull rollers 68. The pull rollers 68 are adapted to successively increase rotation speeds thereof so that a rotation speed just before the string-like extrudate 60 is broken is recorded as a threshold pulling speed.

The date in Table 5 represent results as obtained.

**TABLE 5**

| Threshold Pulling Speed (m/min) | |
|---|---|
| Examples | |
| 8 | 2.2 |
| 9 | 2.9 |
| 10 | 4.0 |
| 11 | 5.2 |
| 12 | 8.4 |

| Controls | |
|---|---|
| 4 | 1.9 |
| 5 | 0.7 |

As apparent from the data in Table 5, each of the resinous materials in Examples 8 to 12 and Control 4 has a threshould pulling speed greater than that of PVC in the control 5. This shows that each of the resinous materials has an improved melt elongation.

Each of the resinous materials in Examples 8 to 12 and Controls 4 and 5 was practically extruded from the extrusion molding machine 11 to form the molding 1 as shown in FIG. 3, in order to examine formability thereof, especially, to examine conformability to travel of the supplemental die 22.

In the evaluation, the resinous material was judged to be a practically usable one if the supplemental die 22 is shiftable at a speed not less than 5 mm/sec during the extrusion molding. Further, the resinous material was judged to be an most preferable one if the supplemental die 22 is shiftable at a speed not less than 10 mm/sec during the extrusion molding.

Table 6 shows the result of the evaluation with respect to each of the resinous materials (Examples 8 to 12 and Controls 4 and 5)

Simbols X, △ and ○ used in Table 6 refer to as follows:
- X :: The supplemental die can be shifted at a speed of 5 mm/sec.
- △ :: The supplemental die can be shifted at a speed of 5 mm/sec to 10 mm/sec.
- ○ :: The supplemental die can be shifted at a speed not less than 10 mm/sec.

**TABLE 6**

| Evaluation of Formability | |
|---|---|
| Examples | |
| 8 | △ |
| 9 | ○ |
| 10 | ○ |
| 11 | ○ |
| 12 | ○ |

| Controls | |
|---|---|
| 4 | X |
| 5 | X |

As seen in the result, each of the resinous materials in Controls 4 and 5 was not preferable for a practical use since the supplemental die 22 is not shiftable at a practical moving speed during the extrusion molding.

In contrast, each of the resinous materials in Examples 8 to 12 was preferable for the present molding method.

In other words, each of the resinous materials in Examples 8 to 12 may sufficiently conform to the practical moving speed (5 mm/sec) of the supplemental die 22 so as to effectively produce a molded product which exhibits superior property.

Although, in each of Examples 8 to 12, the copolymer of vinyl chloride with ethylene does not contain other ingredients, some ingredients, for example, a plasticizer which is generally used for preparing a compound, can be added to the copolymer, without deteriorating the melt elongation characteristics.

Each of Examples 1 to 12 exemplifies the molding 1 for vehicle shown in FIG. 3 and the extrusion molding method carried out by utilizing the extrusion molding die 11 shown in FIG. 1. However, the present invention is not limited to these examples, and is adaptable to a molded product of which the cross-sectional configuration is changed in a longitudinal direction and to an extrusion molding method thereof.

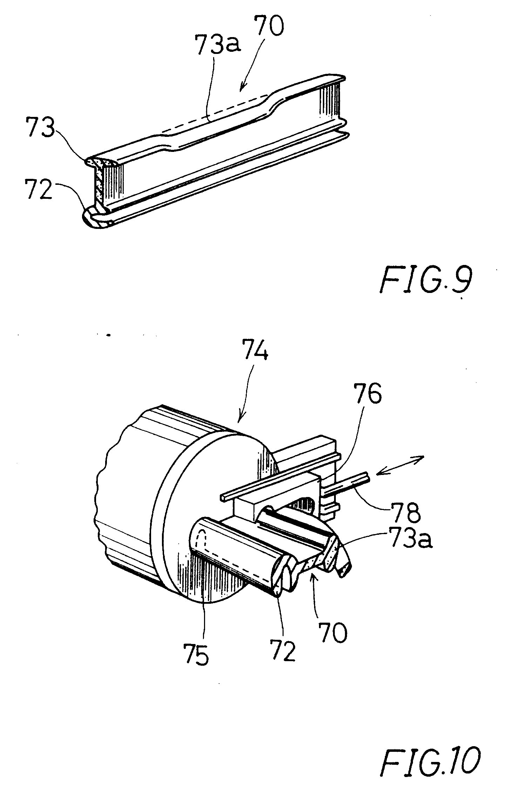

For example, the present invention will be adaptable to a weather strip 70 shown in FIG. 9 and an extrusion molding method of the weather strip 70 carried out by utilizing the extrusion molding die 74 shown in FIG. 10.

The weather strip 70 is constituted of an anchor portion 72, and a head portion 73 including a lowered section 73a which extends over a desired distance in a longitudinal direction. On the other hand, the extrusion molding die 74 is constituted mainly of a main die 75 and the supplemental die 76. The supplemental die 76 can be moved by an extendable rod 78 so as to change the height of the head portion 73 of the weather strip 70.

As described above, the present invention provides the composition containing the copolymer of vinyl chloride with the alkyl ester or the α-olefin, or the composition containing the polymer blend constituted of at least two compounds selected from the group consisting of PVC, the copolymer of vinyl chloride with the alkyl ester, and the polymer of the alkyl ester. The composition can be extrusion molded so as to conform to change of the extrusion opening, thereby to form a good molded product of which the cross-sectional configuration is changed in a longitudinal direction.

Further, according to the present invention, the vinyl chloride based resinous composition as used is improved in property in the molten state. Thus, such a composition may sufficiently conform to change of the extrusion opening and may improve productivity of the extrusion molding.

## Claims

1. An extrusion molded product made of a vinyl chloride based resinous material of which the cross-sectional configuration is changed in a longitudinal direction, the vinyl chloride based resinous material comprising a copolymer of vinyl chloride with alkyl ester or α-olefin.

2. An extrusion molded product made of a vinyl chloride based resinous material of which the cross-sectional configuration is changed in a longitudinal direction, the vinyl chloride based resinous material comprising a polymer blend containing at least two compounds selected from the group consisting of a polymer of vinyl chloride, a polymer of alkyl ester, and a copolymer of vinyl chloride with alkyl ester.

3. The extrusion molded product as defined in claim 2, wherein the vinyl chloride based resinous material comprises a polymer blend containing a polymer of vinyl chloride and a copolymer of vinyl chloride with methyl methacrylate having a methyl methacrylate copolymerization ratio of 2% by weight, said polymer blend containing said copolymer of not less than 50% by weight.

4. The extrusion molded product as defined in claim 2, wherein the vinyl chloride based resinous material comprises a polymer blend containing a polymer of vinyl chloride and a copolymer of vinyl chloride with methyl methacrylate having a methyl methacrylate copolymerization ratio of 8% by weight, said polymer blend containing said copolymer of not less than 10% by weight.

5. The extrusion molded product as defined in claim 1, wherein the vinyl chloride based resinous material comprises a copolymer of vinyl chloride with ethylene having an ethylene copolymerization ratio of not less than 2% and not more than 8%.

6. A method of manufacturing an extrusion molded product by extruding a vinyl chloride based molding material through a first extrusion opening of an extrusion molding die, the extrusion molding die having a main die and a supplemental die to form the first extrusion opening therebetween, comprising:
a first step for providing a vinyl chloride based resinous material as defined in claim 1 or 2 as the vinyl chloride based molding material, and for extruding said vinyl chloride based resinous material through the first extrusion opening; and
a second step for moving a supplemental extrusion opening formed by means of the supplemental die by shifting the supplemental die while extruding said vinyl chloride based resinous material so as to form a second extrusion opening, and for extruding said vinyl chloride based resinous material through said second extrusion opening,
said first and said second steps being carried out at a constant extruding speed.

## Patentansprüche

1. Durch Strangpressen geformtes Produkt aus einem Harz-Material auf Vinylchlorid-Basis, dessen Querschnitts-Anordnung sich in Längsrichtung ändert, wobei das Harz-Material auf Vinylchlorid-Basis ein Copolymer aus Vinylchlorid mit einem Alkylester oder einem α-Olefin umfaßt.

2. Durch Strangpressen geformtes Produkt aus einem Harz-Material auf Vinylchlorid-Basis, dessen Querschnitts-Anordnung sich in Längsrichtung ändert, wobei das Harz-Material auf Vinylchlorid-Basis eine Polymer-Mischung umfaßt, die wenigstens zwei Verbindungen enthält, die aus der Gruppe gewählt sind, die besteht aus einem Polymer von Vinylchlorid, einem Polymer eines Alkylesters und einem Copolymer aus Vinylchlorid mit einem Alkylester.

3. Durch Strangpressen geformtes Produkt nach Anspruch 2, worin das Harz-Material auf Vinylchlorid-Basis eine Polymer-Mischung umfaßt, die ein Polymer aus Vinylchlorid und ein Copolymer aus Vinylchlorid mit Methylmethacrylat umfaßt, das ein Methylmethacrylat-Copolymerisationsverhältnis von 2 Gew.-% aufweist, wobei die Polymer-Mischung das Copolymer in einer Menge von nicht weniger als 50 Gew.-% enthält.

4. Durch Strangpressen geformtes Produkt nach Anspruch 2, worin das Harz-Material auf Vinylchlorid-Basis eine Polymer-Mischung umfaßt, die ein Polymer aus Vinylchlorid und ein Copolymer aus Vinylchlorid mit Methylmethacrylat umfaßt, das ein Methylmethacrylat-Copolymerisationsverhältnis von 8 Gew.-% aufweist, wobei die Polymer-Mischung das Copolymer in einer Menge von nicht weniger als 10 Gew.-% enthält.

5. Durch Strangpressen geformtes Produkt nach Anspruch 1, worin das Harz-Material auf Vinylchlorid-Basis ein Copolymer aus Vinylchlorid mit Ethylen umfaßt, das ein Ethylen-Copolymerisationsverhältnis von nicht weniger als 2 Gew.-% und nicht mehr als 8 Gew.-% aufweist.

6. Verfahren zur Herstellung eines durch Strangpressen geformten Produktes durch Extrudieren eines Form-Materials auf Vinylchlorid-Basis durch eine erste Extrusionsöffnung einer Strangpress-Düse, wobei die Strangpress-Düse eine Haupt-Düse und eine Zusatz-Düse aufweist und so zwischen diesen die erste Extrusionsöffnung bildet, wobei das Verfahren umfaßt:
einen ersten Schritt der Bereitstellung eines Harz-Materials auf Vinylchlorid-Basis nach Anspruch 1 oder Anspruch 2 als Form-Material auf Vinylchlorid-Basis und des Extrudierens des Harz-Materials auf Vinylchlorid-Basis durch die erste Extrusionsöffnung; und
einen zweiten Schritt des Bewegens einer Ergänzungs-Extrusionsöffnung, die mittels der Ergänzungs-Düse gebildet wird, durch Verschieben der Ergänzungs-Düse, während das Harz-Material auf Vinylchlorid-Basis extrudiert wird, unter Bildung einer zweiten Extrusionsöffnung und des Extrudierens des Harz-Materials auf Vinylchlorid-Basis durch die zweite Extrusionsöffnung;
wobei der erste und der zweite Schritt bei konstanter Extrusionsgeschwindigkeit durchgeführt werden.

## Revendications

1. Produit moulé par extrusion réalisé en un matériau de résine à base de chlorure de vinyle dont la configuration en coupe transversale est modifiée dans la direction longitudinale, le matériau de résine à base de chlorure de vinyle comportant un copolymère de chlorure de vinyle avec un ester d'alkyle ou une α-oléfine.

2. Produit moulé par extrusion constitué d'un matériau de résine à base de chlorure de vinyle dont la configuration en coupe transversale est modifiée dans la direction longitudinale, le matériau de résine à base de chlorure de vinyle comportant un mélange de polymères contenant au moins deux composés sélectionnés parmi le groupe constitué d'un polymère de chlorure d'un vinyle, d'un polymère d'ester d'alkyle, et d'un copolymère de chlorure de vinyle avec un ester d'alkyle.

3. Produit moulé par extrusion selon la revendication 2, dans lequel le matériau de résine à base de chlorure de vinyle comprend un mélange de polymères contenant un polymère do chlorure de vinyle et un copolymère de chlorure de vinyle avec du méthacrylate de méthyle ayant un rapport de copolymérisation du méthacrylate de méthyle de 2 % en poids, ledit mélange de polymères ne contenant pas moins de 50 % en poids de copolymère.

4. Produit moulé par extrusion selon la revendication 2, dans lequel le matériau de résine à base de chlorure de vinyle comprend un mélange de polymères contenant un polymère de chlorure de vinyle et un copolymère de chlorure de vinyle avec du méthacrylate de méthyle ayant un rapport de copolymérisation de méthacrylate de méthyle de 8 % en poids, ledit mélange de polymères ne contenant pas moins de 10 % en poids de copolymère.

5. Produit moulé par extrusion selon la revendication 1, dans lequel le matériau de résine à base de chlorure de vinyle comprend un copolymère de chlorure de vinyle avec l'éthylène ayant un rapport de copolymérisation d'éthylène d'au moins 2 % et pas plus grand que 8 %.

6. Procédé de fabrication d'un produit moulé par extrusion en extrudant un matériau de moulage à base de chlorure de vinyle à travers une première ouverture d'extrusion d'une filière de moulage par extrusion, la filière de moulage par extrusion ayant une filière principale et une filière supplémentaire pour former entre elles la première ouverture d'extrusion, comportant :
une première étape consistant à fournir un matériau de résine à base de chlorure de vinyle tel que défini dans la revendication 1 ou 2 en tant que matériau de moulage à base de chlorure de vinyle, et à extruder ledit matériau de résine à base de chlorure de vinyle à travers la première ouverture d'extrusion, et
une seconde étape consistant à déplacer une ouverture d'extrusion supplémentaire formée par l'intermédiaire de la filière supplémentaire en déplaçant la filière supplémentaire tout en extrudant ledit matériau de résine à base de chlorure de vinyle de manière à former une seconde ouverture d'extrusion, et à extruder ledit matériau de résine à base de chlorure de vinyle à travers ladite seconde ouverture d'extrusion,
lesdites première et seconde étapes étant exécutées à une vitesse d'extrusion constante.
